# EUROPÄISCHE PATENTSCHRIFT

(11) **EP 3 169 891 B1**
(45) Veröffentlichungstag und Bekanntmachung des Hinweises auf die Patenterteilung: **28.03.2018**
(21) Anmeldenummer: 15724278.5
(22) Anmeldetag: 21.05.2015
(51) Int. Cl.: F02P 3/02

(54) **WICKLUNGSSCHEMA FÜR EINEN TRANSFORMATOR EINES HOCHSETZSTELLERS UND ZÜNDSYSTEM ZUR VERSORGUNG EINER FUNKENSTRECKE EINER BRENNKRAFTMASCHINE MIT ELEKTRISCHER ENERGIE**
WINDING SCHEME FOR A TRANSFORMER OF A STEP-UP CONVERTER AND IGNITION SYSTEM FOR SUPPLYING A SPARK GAP OF AN INTERNAL COMBUSTION ENGINE WITH ELECTRIC ENERGY
SCHÉMA D'ENROULEMENT POUR UN TRANSFORMATEUR D'UN CONVERTISSEUR ÉLÉVATEUR DE TENSION ET SYSTÈME D'ALLUMAGE SERVANT À ALIMENTER EN ÉNERGIE ÉLECTRIQUE UN ÉCLATEUR D'UN MOTEUR À COMBUSTION INTERNE

(30) Priorität: 18.07.2014 DE 102014214074
(43) Veröffentlichungstag der Anmeldung: 24.05.2017
(73) Patentinhaber: Robert Bosch GmbH, 70442 Stuttgart (DE)
(72) Erfinder: STEINBERGER, Werner, 87509 Immenstadt (DE)
(86) Internationale Anmeldenummer: PCT/EP2015/061225
(87) Internationale Veröffentlichungsnummer: WO 2016/008619

(56) Entgegenhaltungen:
- EP-A1- 0 984 463
- WO-A1-2008/148765

## Beschreibung

### Stand der Technik

Die vorliegende Erfindung betrifft einen Hochsetzsteller sowie ein Zündsystem zur Versorgung einer Funkenstrecke einer Brennkraftmaschine mit elektrischer Energie. Insbesondere betrifft die vorliegende Erfindung eine Spulengeometrie zur Ermöglichung einer verbesserten automatisierten Fertigung eines Transformators.

Im Stand der Technik sind Zündsystems bekannt, welche eine Hochspannung erzeugen, mittels welcher brennfähige Gemische einer fremdgezündeten Brennkraftmaschine entzündet werden. Zur verbesserten Steuerbarkeit der Zündfunkenenergie, zur Verringerung des Elektrodenverschleißes und zur Erzielung weiterer Vorteile schlägt der Stand der Technik vor, eine Zündspule mit einem Hochsetzsteller zu kombinieren, wobei der Hochsetzsteller einen mittels der Zündspule erzeugten Zündfunken mit elektrischer Energie versorgt. Der Hochsatzsteller wandelt eine Eingangsspannung in eine höhere Ausgangsspannung um. Während der Einschaltphase des Schalters des Hochsetzstellers wird Energie in die Induktivität (Speicherdrossel) des Hochsetzstellers geladen. Diese wird bei geöffnetem Schalter über die Diode des Hochsetzstellers an den Ausgangskondensator übertragen. Wird der Schalter (z. B. ein IGBT oder MOSFET) z.B. über eine Pulsweitenmodulation angesteuert, ist die Ausgangsspannung unter Anderem eine Funktion des Tastverhältnisses. Eine solche Speicherdrossel wird im Stand der Technik oft als Ringkern mit einem durch einen Luftspalt gescherten Ferritkern ausgeführt. Für die Verwendung eines Hochsetzsteller in einem Zündsystem sind typischerweise Ausgangsspannung von ca. 6 kV erforderlich. Elektronische Schalter (z. B. IGBT oder MOSFET) können in der Regel nicht für solch hohe Spannungen eingesetzt werden. Ihre maximalen Schaltspannungen liegen im Bereich 600 V bis 1.000 V. Durch die Ausführung der Speicherdrossel als Transformator mit einem Übersetzungsverhältnis von z. B. 1:10 beziehungsweise 1/10 kann die Spannung am Schalter von ca. 6 kV auf 600 V reduziert werden. Ein solcher Transformator könnte z. B. auch als Ringkern ausgeführt werden. Die Nachteile hierbei liegen für den Fachmann jedoch auf der Hand:
- Die Ringkernwicklungen sind schlecht automatisierbar.
- Die Drahtenden sind meist verzinnt und müssen auf der Leiterplatte selektiv gelötet werden.
- Die Ausgangsspannung von z. B. 6 kV muss gegenüber dem Ferritkern isoliert werden, was vergleichsweise aufwendig z. B. durch eine Umspritzung erreicht werden kann.
- Die Sekundärwicklung muss gegenüber der Primärwicklung elektrisch isoliert werden. Drähte für diese Spannungen sind am Markt nahezu nicht erhältlich. Die verfügbaren Drähte haben zu große Außendurchmesser für den Einsatz in einem Ringkernübertrager, dessen Volumen möglichst klein zu halten ist. Auch Folienisolierungen zwischen Primärwicklung und Sekundärwicklung sind bei der angestrebten Baugröße nicht möglich.

Ein Hochsetzsteller zur Versorgung einer Funkenstrecke einer Brennkraftmaschine nach dem Oberbegriff des Anspruchs 1 ist in EP 0 984 463 gezeigt.

Eine mögliche Bauform für den erfindungsgemäß einzusetzenden Transformator besteht in einer mehrteiligen (z.B. zweiteiligen, dreiteiligen oder vierteiligen) Schalenkern-Ausführung mit einem durch einen Luftspalt gescherten Ferritkern. Hierbei werden die Primär- und Sekundärwicklung auf einen Spulenkörper gewickelt, die Drahtenden in Kontakttaschen gelegt und über eine kalte Kontaktierung (z. B. durch eine Schneidklemmverbindung (SKV)) kontaktiert. Die Kontaktierung zur Leiterplatte kann eine Lötverbindung oder eine kalte Kontaktierung wie z. B. Flexpin sein.

Bei im Stand der Technik bekannten Schalenkern-Übertragern werden die vorstehend genannten Nachteile, insbesondere bezüglich der erforderlichen Isolierung, jedoch nicht gelöst.

### Offenbarung der Erfindung

Die vorliegende Erfindung stillt den vollstehend identifizierten Bedarf durch einen Hochsetzsteller zur Versorgung einer Funkenstrecke einer fremdgezündeten Brennkraftmaschine mit elektrischer Energie gemäss Anspruch 1. Auch wenn im Rahmen der vorliegenden Erfindung zur Veranschaulichung die Verwendung in einem Zündsystem beschrieben wird, ist eine Verwendung des erfindungsgemäßen Hochsetzstellers in anderen Umgebungen möglich, so dass die Bezugnahme auf eine Funkenstrecke und ihre Anschlüsse lediglich beispielhaft zu verstehen ist. Der Hochsetzsteller umfasst einen Transformator mit einer Primärspule und einer Sekundärspule. Die Sekundärspule ist mehrlagig gewickelt und die Primärspule koaxial zur Sekundärspule über eine äußerste Lage der Sekundärspule gewickelt. Die Wicklungen des Transformators selbst können galvanisch voneinander getrennt sein. Die Drähte der Spulen können hierzu beispielweise durch dünne Lackschichten elektrisch gegeneinander isoliert sein. Sowohl die Sekundärspule als auch die Primärspule weisen jeweils einen ersten elektrischen Anschluss und einen zweiten elektrischen Anschluss auf. Der erste elektrische Anschluss der Sekundärspule zweigt von einer innersten Lage von Wicklungen der Sekundärspule ab. Dieser erste elektrische Anschluss der Sekundärspule ist erfindungsgemäß zur elektrischen Verbindung mit einem Hochspannungsanschluss z.B. für die Funkenstrecke vorgesehen und/oder eingerichtet. Beispielsweise kann in diesem Zusammenhang auch eine elektrische Verbindung mit der Sekundärspule eines Primärspannungserzeugers (z.B. Zündspule) vorgesehen werden. Mit anderen Worten wird derjenige elektrische Anschluss der Sekundärspule, über welchen die elektrische Energie z.B. einer Funkenstrecke eines Zündsystems bereitgestellt wird, im Wickelgrund (auch "Kammergrund" genannt) angeordnet. Auf dieser Weise ist der elektrische Anschluss maximal von der Primärspule des Transformators beabstandet, wodurch die Maßnahmen zur elektrischen Isolation des ersten elektrischen Anschlusses minimiert werden können. Auf diese Weise ermöglicht die vorliegende Erfindung eine gute Automatisierbarkeit bei elektrischen Isolationsmaßnahmen eines Transformators, welche das Volumen des Transformators nur minimal erhöhen.

Die Unteransprüche zeigen bevorzugte Weiterbildungen der Erfindung. Nach der Erfindung können ein zweiter elektrischer Anschluss der Sekundärspule und alternativ oder zusätzlich ein erster elektrischer Anschluss der Primärspule einer bordnetzseitigen Eingangsspannung zugeordnet sein. Insbesondere kann der erste elektrische Anschluss der Primärspule von einer Wicklung der Primärspule abzweigen, welche einen minimalen Abstand von der Sekundärspule aufweist. Die besagte Wicklung ist direkt auf einer äußersten Lage der Sekundärspule angordnet. Die vorstehend genannte Anordnung begünstigt eine maximale Entfernung der Anschlüsse mit im Betrieb höchsten Potenzialdifferenzen, wodurch die Isolationsmaßnahmen weiter verringert werden können.

Ein zweiter elektrischer Anschluss der Primärspule kann über einen steuerbaren Schalter einem Niederspannungsanschluss für die Funkenstrecke zugeordnet sein. Der steuerbare Schalter kann beispielsweise als IGBT oder als MOSFET ausgestaltet sein. Der zweite elektrische Anschluss der Primärspule ist also mit anderen Worten demjenigen Anschluss der Funkenstrecke zugeordnet, welcher dem ersten elektrischen Anschluss der Sekundärspule elektrisch gegenüberliegt.

Bevorzugt kann auch die Primärspule des erfindungsgemäß verwendeten Transformators mehrlagig gewickelt sein und der erste Anschluss der Primärspule von einer innersten Lage der Primärspule abzweigen. Ein maximaler elektrischer Abstand für die elektrischen Potenziale der Anschlüsse ergibt nach der Erfindung zudem, wenn der zweite Anschluss der Primärspule von einer äußersten Lage der Primärspule abzweigt. Auf diese Weise kann eine geringstmögliche zusätzlich erforderliche elektrische Isolation der Wicklungsdrähte gegeneinander erzielt werden.

Der Transformator umfasst zur verbesserten Automatisierbarkeit seiner Fertigung weiter einen Spulenkörper mit einem im Wesentlichen rotationssymmetrischen Grundkörper. Der Grundkörper ist mit einem Kammergrund und beidseitig an den Kammergrund anschließenden Kammerwänden ausgestattet, wobei die Sekundärspule unmittelbar auf dem Kammergrund zwischen den Kammerwänden und die Primärspule auf die äußerste Lage der Sekundärspule zwischen den Kammerwänden gewickelt ist. Einerseits ergibt sich durch die Kammerwände eine vereinfachte Richtungsumkehr beim Anordnen der Wicklungen nebeneinander. Andererseits wird sichergestellt, dass die Wicklungen der Spulen möglichst kompakt angeordnet werden und bleiben. Insbesondere können die Kammerwände im Wesentlichen parallel zueinander angeordnet und im Wesentlichen ringscheibenförmig ausgestaltet sein. Eine innerste Kante der Kammerwände kann somit an den im Wesentlichen hohlzylindrisch ausgestalteten Kammergrund anschließen. Auf diese Weise sind die Spulen des Transformators dreiseitig durch den Spulenkörper eingehaust, durch welchen zusätzlich eine exakte Platzierung in einem Ringkern ermöglicht wird.

Am Spulenkörper kann eine Tasche zur räumlichen Festlegung der Anschlussdrähte nach dem Prinzip einer Schneid-Klemm-Verbindung angeordnet sein. Die elektrischen Anschlüsse können eine kalte Kontaktierung (SKV o. ä.) ermöglichen. Insbesondere kann die Klemmschiene derart an dem Spulenkörper angeordnet sein, dass der erste elektrische Anschluss der Sekundärspule im Bereich des Kammergrundes aus dem Spulenkörper herausgeführt wird und außerhalb der Kammerwände an die Klemmschiene herangeführt wird. Auf diese Weise isoliert eine Kammerwand den ersten elektrischen Anschluss der Sekundärspule von sämtlichen Wicklungen des Transformators. Selbst für den Fall, dass der erste elektrische Anschluss durch eine unvorhergesehene Belastung hinsichtlich seiner elektrischen Isolation in Mitleidenschaft gezogen würde, bleibt eine Isolation durch die Kammerwand gegenüber den Wicklungen des Transformators zuverlässig bestehen.

Der Transformator kann beispielsweise ein Übersetzungsverhältnis zwischen 1:5 und 1:20, insbesondere zwischen 1:8 und 1:15, bevorzugt 1:10 aufweisen. Das Übersetzungsverhältnis wird von der Ausgangsspannung und der maximalen Schaltspannung des verwendeten Schalters (z.B. IGBT/MOSFET) bestimmt. Auf diese Weise kann eine sekundärseitige Spannung im Bereich von 6 kV ohne Gefahr für den steuerbaren Schalter in einer primärseitigen Masche des Transformators geschaltet werden.

Der Spulenkörper kann zur Unterstützung der Führung des magnetischen Feldes in einen Ferritkern oder ein Blechpaket eingelassen sein. Der Ferritkern bzw. das Blechpaket kann beispielsweise aus zwei Kernhälften aufgebaut sein, welche von entgegengesetzten Seiten an den Spulenkörper herangeführt werden. Beispielsweise können die Kernhälften spiegelsymmetrisch zueinander ausgestaltet sein. An den einander zugewandten Flächen weisen die Kernhälften bevorzugt ringförmige oder teilringförmige Kavitäten zur Aufnahme des Spulenkörpers auf. Die Kernhälften ragen jeweils mit einem zylinderförmigen Kernabschnitt in den Spulenkörper hinein. Im Bereich des den Spulenkörper anteilig durchdringenden Ferritkerns bzw. Blechpaketes kann vorgesehen sein, dass sich die beiden Kernhälften auch im vollständig zusammengesetzten Zustand nicht berühren. Auf diese Weise ergibt sich ein vordefinierter Luftspalt zwischen den beiden Kernhälften.

Gemäß einem zweiten Aspekt der vorliegenden Erfindung wird ein Zündsystem mit einer Funkenstrecke zur Fremdzündung eines brennfähigen Gemisches einer Brennkraftmaschine vorgeschlagen, welches einen Hochsetzsteller umfasst, wie er in Verbindung mit dem erstgenannten Erfindungsaspekt im Detail beschrieben worden ist. Der Hochsetzsteller dient dem Versorgen eines an der Funkenstrecke bestehenden Zündfunkens mit elektrischer Energie. Mit anderen Worten erzeugt das Zündsystem zunächst mittels eines Primärspannungserzeugers einen Zündfunken, welcher mittels des erfindungsgemäß ausgestalteten Hochsetzstellers mit elektrischer Energie versorgt und somit gesteuert aufrechterhalten wird. Der erste elektrische Anschluss der Sekundärspule ist z.B. elektrisch mit einem Hochspannungsanschluss der Funkenstrecke verbunden. Entsprechend den obigen Ausführungen kann ein zweiter elektrischer Anschluss der Primärspule mit einem Niederspannungsanschluss der Funkenstrecke elektrisch verbunden sein. Alternativ oder zusätzlich sind der zweite elektrische Anschluss der Sekundärspule und alternativ oder zusätzlich der erste elektrische Anschluss der Primärspule einer bordnetzseitigen Eingangsspannung zugeordnet. Mit anderen Worten können die letztgenannten elektrischen Anschlüsse aus Sicht der Funkenstrecke jenseits des Transformators angeordnet sein.

Zur Erzeugung der Ausgangsspannung des Hochsetzstellers kann der zweite Anschluss der Primärspule eingerichtet sein, mittels eines steuerbaren Schalters (z. B. in Form eines IGBTs oder MOSFETs) elektrisch mit dem Niederspannungsanschluss der Funkenstrecke verbunden zu werden. Über den steuerbaren Schalter wird die Frequenz sowie das Tastverhältnis des Hochsetzstellers und somit dessen ausgangsseitige Leistungsentfaltung gesteuert.

Durch das erfindungsgemäße Verschalten der Wicklungen des Transformators lässt sich die Spannungsbelastung für den einzelnen Draht reduzieren. Wickeltechnisch kann zunächst eine Sekundärspule mit z. B. acht Lagen hergestellt werden, auf welche dann die Primärspule unmittelbar aufgewickelt wird. Zusätzlich kann eine optionale Folienlage zwischen die Primär- und die Sekundärspule gebracht werden, um die elektrische Isolation beider Spulen gegeneinander weiter zu verbessern. Auf diese Weise reduziert sich die Spannungsbelastung für die Drahtisolierung der Sekundärspule auf die ausgangsseitige Spannung des Hochsetzstellers geteilt durch die Anzahl der Lagen der Sekundärwicklung (im Beispiel 6 kV/8 = 750 V). Bereits einfache Kupferlackdrähte der Spezifikation "Grad2" oder einer höheren Spezifikation können diese Spannung dauerhaft isolieren. Mit Erhöhung der Lagenanzahl kann die Spannungsbelastung der Drahtisolierung weiter reduziert werden. Die Spannung am steuerbaren Schalter, welcher im Betrieb die Sekundärspule mit dem Niederspannungsanschluss der Funkenstrecke verbindet, reduziert sich bei einem Übersetzungsverhältnis von z. B. 1:10 auf 600 V. Für diese Spannung sind marktübliche IGBTs oder MOSFETs erhältlich. Der zweite Anschluss der Primärspule sowie der erste Anschluss der Sekundärspule erhalten die eingangsseitige Bordnetzspannung (z. B. 12 V).

Bevorzugt können beide elektrischen Anschlüsse der Sekundärspule auf der Außenseite des Spulenkörpers (außerhalb der Kammerwände) herausgeführt werden, während die elektrischen Anschlüsse der Primärspule auf der Innenseite (zwischen den Kammerwänden) verlegt werden. Bei symmetrischem Aufbau des Spulenkörpers sind die Polarität der Ausgangsspannung sowie die Anschlussbelegung / Pinbelegung des Transformators leicht tauschbar.

### Kurze Beschreibung der Zeichnungen

Nachfolgend werden Ausführungsbeispiele der Erfindung unter Bezugnahme auf die begleitenden Zeichnungen im Detail beschrieben. In den Zeichnungen ist:
- Figur 1: eine perspektivische Ansicht eines herkömmlichen für einen Hochsetzsteller verwendbaren Transformators;
- Figur 2: ein Schaltbild eines Hochsetzsteller gemäß einem Ausführungsbeispiel der vorliegenden Erfindung;
- Figur 3: eine geschnittene Darstellung eines als zweiteiliger Schaltenkern-Übertrager ausgeführten Ausführungsbeispiels eines Transformators gemäß der vorliegenden Erfindung;
- Figur 4a: eine perspektivische Ansicht eines Ausführungsbeispiels eines erfindungsgemäßen Transformators;
- Figur 4b: eine Explosionszeichnung des in Figur 4a dargestellten Transformators;
- Figur 5a/b: Seitenansichten veranschaulichend bevorzugte Positionierungen der Anschlüsse der Spulen des erfindungsgemäßen Transformators; und
- Figur 6: eine Draufsicht auf ein Ausführungsbeispiel eines erfindungsgemäßen Transformators.

### Ausführungsformen der Erfindung

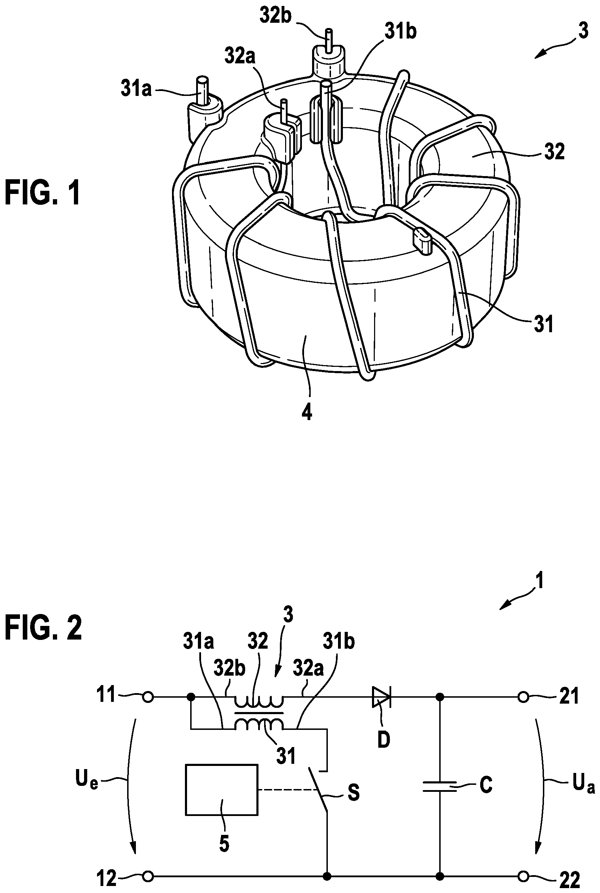

Figur 1 zeigt eine perspektivische Darstellung eines Transformators 3 gemäß dem Stand der Technik. Ein eingespritzter Ferritkern 4 enthält eine Sekundärwicklung 32, deren elektrischer Anschluss 32a auf der Innenseite des Ringkerns und deren elektrischer Anschluss 32b auf der Außenseite des ringförmigen Ferritkerns 4 herausgeführt ist. Auf die Sekundärwicklung ist eine Primärwicklung 31 aufgewickelt, deren elektrischer Anschluss 31a auf der Außenseite des Ferritkerns 4 und deren elektrischer Anschluss 31b auf der Innenseite des Ferritkerns 4 herausgeführt ist. Die dargestellte Bauform des Transformators 3 ist erkennbar schlecht automatisiert herstellbar.

Figur 2 zeigt ein Schaltbild eines erfindungsgemäßen Hochsetzstellers 1, dessen eingangsseitige Klemmen 11, 12 mit einer Bordnetzspannung Uₑ beaufschlagt werden, um an ausgangsseitigen Klemmen 21, 22 eine ausgangsseitige Hochspannung Uₐ für eine (nicht dargestellte) Funkenstrecke bereitzustellen. Ein Transformator 3 ist derart in den dargestellten Hochsetzsteller 1 integriert, dass seine Sekundärspule 32 als Drosselspule zum Aufladen einer ausgangsseitigen Kapazität C dient. Hierbei dient eine Diode D zur Verhinderung eines Rückflusses der auf der Kapazität C gespeicherten Ladung über den Transformator 3. Der Transformator 3 dient dazu die am Schalter S auftretenden Spannungen zu reduzieren. Die Primärspule 31 des Transformators 3 ist hierzu über einen Schalter S, welcher über eine Steuereinheit 5 gesteuert wird, mit einem Niederspannungsanschluss 22 der Funkenstrecke verbunden. Erkennbar liegen ein erster elektrischer Anschluss 31a der Primärspule 31 und ein zweiter elektrischer Anschluss 32b der Sekundärspule 32 auf einem identischen Potenzial entsprechend der Eingangsspannung Uₑ. Für den zweiten elektrischen Anschluss 31b der Primärspule 31 und einen ersten elektrischen Anschluss 32a der Sekundärspule 32 sind aufgrund des Übersetzungsverhältnisses des Transformators 3 jedoch erhebliche Potenzialunterschiede im Betrieb zu erwarten. Das erfindungsgemäß vorgeschlagene Wickelschema, welches in Verbindung mit den nachfolgenden Figuren im Detail beschrieben wird, ermöglicht eine Ausführung mit geringem Aufwand an zusätzlichen elektrischen Isolationsmaßnahmen.

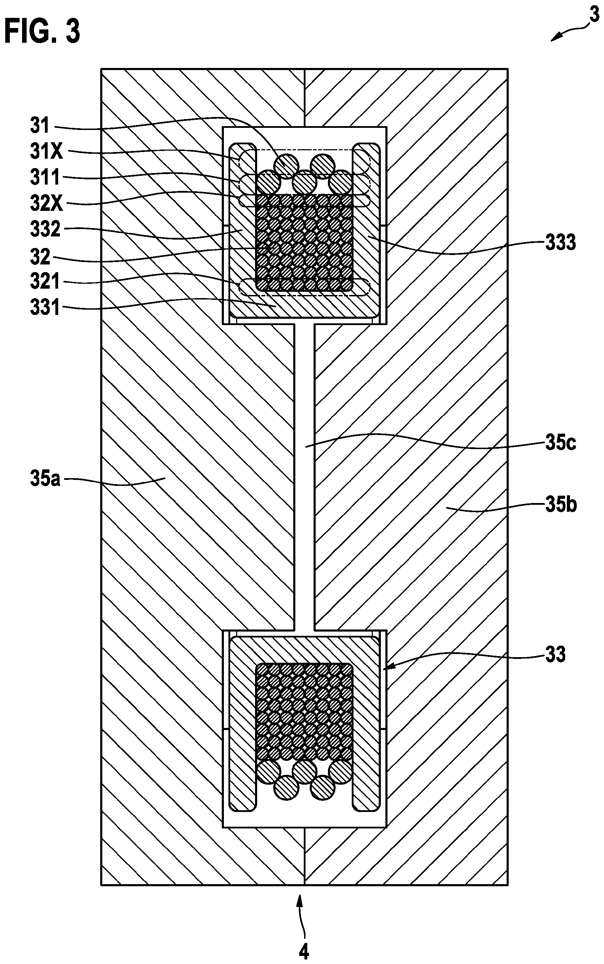

Figur 3 zeigt eine Schnittdarstellung durch einen Transformator 3, dessen Primärspule 31 und Sekundärspule 32 in einen Spulenkörper 33 eingelegt sind, welcher wiederum in einem Ferritkern 4 liegt, welcher aus einer ersten Schalenhälfte 35a und einer zweiten Schalenhälfte 35b bestehend symmetrisch aufgebaut ist. Erkennbar weist der den Spulenkörper zumindest anteilig durchdringende Bereich der Schalenhälften 35a, 35b einen Luftspalt 35c auf, da sich in diesem Bereich die Schalenhälften 35a und 35b nicht berühren. Der Spulenkörper 33 weist einen in Wicklungsrichtung entlang einer Kreisbahn verlaufenden u-förmigen Querschnitt auf, an dessen Kammergrund 331 zwei parallel zueinander angeordnete Kammerwände 332, 333 anschließen. Eine erste Lage 321 der Sekundärspule 32 ist unmittelbar auf den Kammergrund 331 gewickelt. Aus dieser Lage 321 wird der (nicht dargestellte) erste elektrische Anschluss der Sekundärspule 32 herausgeführt. Eine äußerste Lage 32X der Sekundärspule 32 ist an den (nicht dargestellten) zweiten elektrischen Anschluss der Sekundärspule 32 angeschlossen. Unmittelbar auf die äußerste Lage 32X der Sekundärspule 32 ist eine innerste Lage 311 der Primärspule 31 gewickelt, an welche ein (nicht dargestellter) erster elektrischer Anschluss der Primärspule 31 angeschlossen ist. Die dargestellte Primärspule 31 weist lediglich zwei Lagen auf, von deren äußerster Lage 31X ein (nicht dargestellter) zweiter elektrischer Anschluss abzweigt.

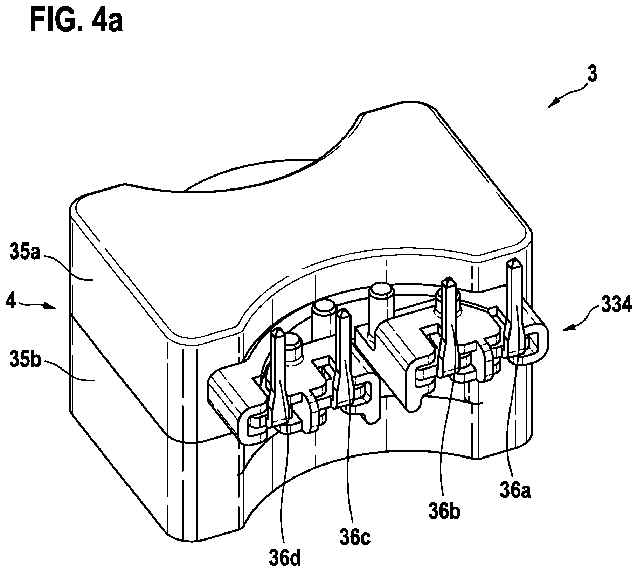

Figur 4a zeigt eine perspektivische Ansicht eines erfindungsgemäß ausgestalteten Transformators 3, dessen (nicht dargestellte) Spulen in zwei Schalenhälften 35a, 35b eines Ferritkerns 4 eingeschlossen sind. Außerhalb des Ferritkerns 4 ist eine Tasche 334 angeordnet, welche Klemmschienen 36a, 36b, 36c, 36d zur externen elektrischen Kontaktierung aufweist.

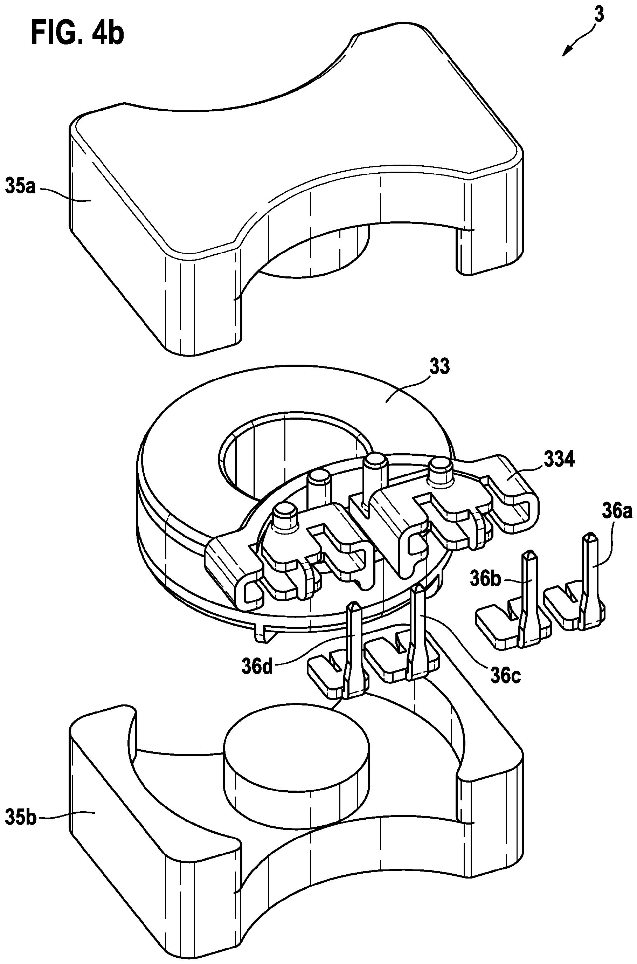

Figur 4b zeigt den in Figur 3a dargestellten Transformator 3 in Explosionsdarstellung, in welcher der Spulenkörper 33 mit einer Tasche 334 und Klemmschienen 36a, 36b, 36c, 36d dargestellt ist.

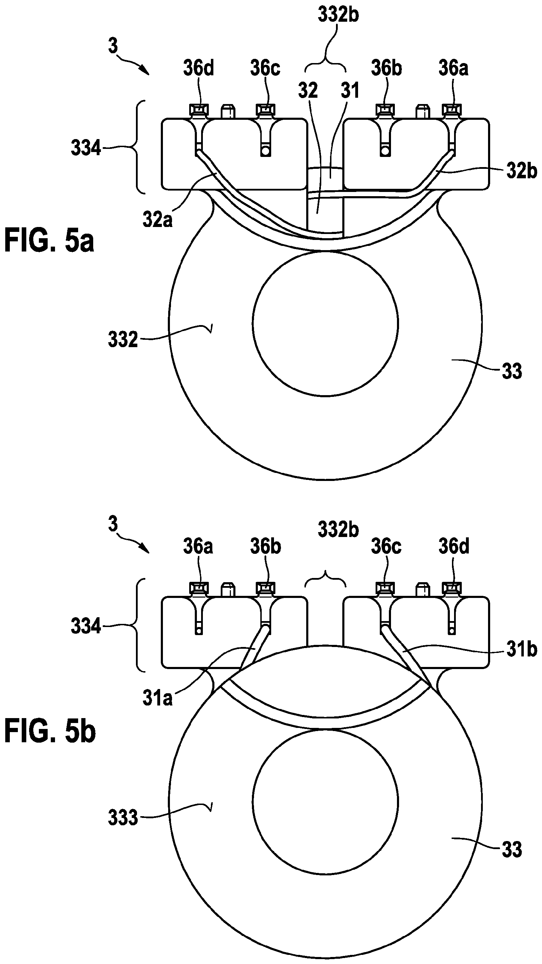

Figur 5a zeigt eine Seitenansicht eines Ausführungsbeispiels eines Transformators 3, bei welchem die Führung der elektrischen Anschlüsse 32a, 32b der Sekundärspule 32 an die Klemmschiene 36a beziehungsweise 36d ersichtlich ist. Der erste elektrische Anschluss 32a der Sekundärspule 32 wird durch eine Ausnehmung 332b in der Kammerwand 332 des Spulenkörpers 33 von der innersten Lage der Sekundärspule 32 außerhalb der Kammerwand 332 an die Klemmschiene 36d geführt. Der zweite elektrische Anschluss 32b der Sekundärspule 32 wird durch dieselbe Ausnehmung 332b in der Kammerwand 332 des Spulenkörpers 33 an die Klemmschiene 36a geführt. Die elektrischen Anschlüsse 31a, 31b der Primärspule 31 werden von der gegenüberliegenden Seite an die Klemmschienen 36b, 36c herangeführt und mit diesen elektrisch verbunden.

Figur 5b zeigt eine um 180 Grad gedrehte Ansicht des Transformators 3, wie er in Verbindung mit Figur 5a beschrieben worden ist. Die nun zu vorderst angeordnete Kammerwand 333 des Spulenkörpers 33 weist keine Ausnehmung auf. Die elektrischen Anschlüsse 31a, 31b der Primärspule 31 sind zwischen den Kammerwänden 332, 333 in Richtung der Tasche 334 herangeführt und dort mit den Klemmschienen 36b, 36c elektrisch verbunden.

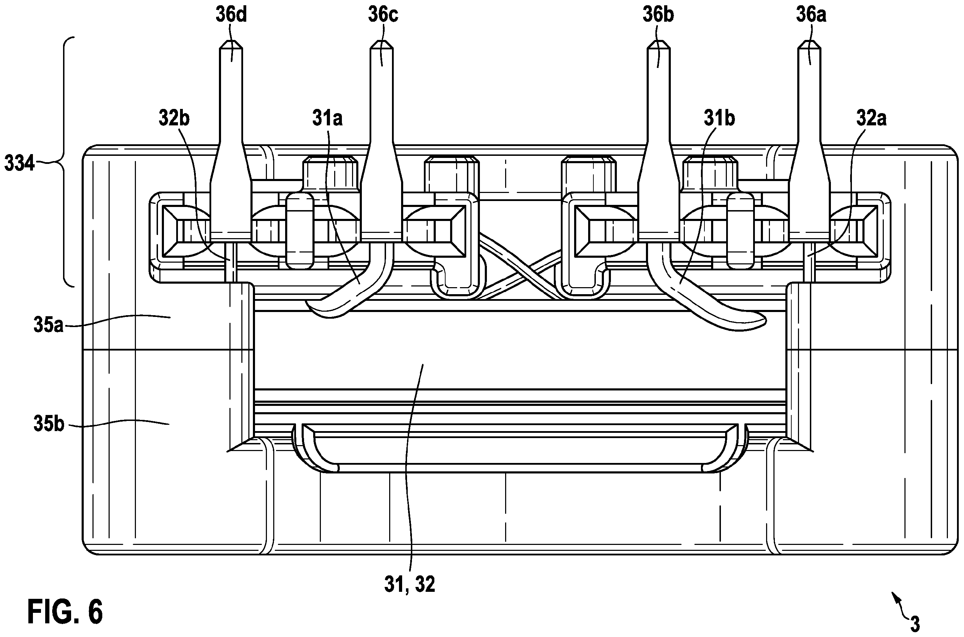

Figur 6 zeigt eine Draufsicht auf eine Tasche 334 eines Ausführungsbeispiels eines erfindungsgemäß ausgestalteten Transformators 3. Erkennbar werden die elektrischen Anschlüsse 31a, 31b der Primärspule 31 mit den Klemmschienen 36b, 36c elektrisch verbunden. Ihre Durchmesser sind größer als diejenigen der elektrischen Anschlüsse 32a, 32b der Sekundärspule 32, welche mit den äußeren Klemmschienen 36a, 36d elektrisch verbunden sind.

## Patentansprüche

1. Hochsetzsteller (1) zur Versorgung einer Funkenstrecke einer Brennkraftmaschine mit elektrischer Energie umfassend:
- einen Transformator (3) mit einer Primärspule (31) und einer Sekundärspule (32), wobei
- die Sekundärspule (32) mehrlagig gewickelt ist und
- die Primärspule (31) koaxial zur Sekundärspule (32) über eine äußerste Lage (32x) der Sekundärspule (32) gewickelt ist, wobei
- ein erster elektrischer Anschluss (32a) der Sekundärspule (32) mit einer innersten Lage (321) der Sekundärspule (32) elektrisch verbunden ist,
- der erste elektrische Anschluss (32a) der Sekundärspule (32) zur elektrischen Verbindung mit einem Hochspannungsanschluss (21) für die Funkenstrecke eingerichtet ist,
**dadurch gekennzeichnet, dass**
- die Spulen (31,32) in zwei Schalenhälften (35a,35b) eines Ferritskerns (4) eingeschlossen sind,
- der Transformator (3) weiter einen Spulenkörper (33) mit einem im Wesentlichen rotationssymmetrischen Grundkörper mit einem Kammergrund (331) und beidseitig an den Kammergrund (331) anschließenden Kammerwänden (332, 333) umfasst, wobei die Sekundärspule (32) auf den Kammergrund (331) zwischen die Kammerwände (332, 333) und die Primärspule (31) auf die äußerste Lage (32X) der Sekundärspule (32) zwischen die Kammerwände (332, 333) gewickelt ist,
- der erste elektrische Anschluss (32a) der Sekundärspule (32) aus einer im Kammergrund (331) liegenden innersten Lage (321) der Sekundärspule (32) herausgeführt ist,
- ein zweiter elektrischer Anschluss (32b) der Sekundärspule (32) und/oder ein erster elektrischer Anschluss (31a) der Primärspule (31) einer bordnetzseitigen Eingangsspannung (Uₑ) zugeordnet ist bzw. sind, und
- von einer äußersten Lage (31X) der Primärspule (31) ein zweiter Anschluss (31b) der Primärspule (31) abzweigt.

2. Hochsetzsteller nach Anspruch 1, wobei ein zweiter elektrischer Anschluss (31b) der Primärspule (31) über einen steuerbaren Schalter (S), insbesondere einen IGBT oder MOSFET, einer elektrischen Masse, insbesondere einem dem Hochspannungsanschluss (21) gegenüberliegenden elektrischen Potential der Funkenstrecke, zugeordnet ist.

3. Hochsetzsteller nach Anspruch 2 und 3, wobei auch die Primärspule (31) mehrlagig gewickelt ist und der erste Anschluss (31a) der Primärspule (31) mit einer innersten Lage (311) der Primärspule (31) elektrisch verbunden ist, und der zweite Anschluss (31b) der Primärspule (31) mit einer äußersten Lage (31X) der Primärspule (31) elektrisch verbunden ist.

4. Hochsetzsteller nach Anspruch 1,
- wobei der Spulenkörper (33) weiter eine Tasche (334) zur räumlichen Festlegung und elektrischen Kontaktierung der elektrischen Anschlüsse (31a, 31b, 32a, 32b) der Spulen (31, 32) aufweist, und/oder
- wobei der erste elektrische Anschluss (32a) der Sekundärspule (32) elektrisch durch eine Kammerwand (332) des Grundkörpers gegenüber der Primärspule (31) isoliert ist.

5. Hochsetzsteller nach einem der vorstehenden Ansprüche, wobei der Transformator (3) ein Übersetzungsverhältnis zwischen 5 und 30, insbesondere zwischen 7 und 20, bevorzugt zwischen 8 und 15, aufweist.

6. Hochsetzsteller nach einem der vorstehenden Ansprüche, wobei die Primärspule (31) und die Sekundärspule (32) aus Kupferlackdrähten bestehen.

7. Zündsystem mit einer Funkenstrecke zur Fremdzündung eines brennfähigen Gemisches einer Brennkraftmaschine, **gekennzeichnet durch**
- einen Hochsetzsteller (1) nach einem der vorstehenden Ansprüchen 1 bis 6 zum Versorgen eines an der Funkenstrecke bestehenden Zündfunkens mit elektrischer Energie, wobei
- der erste elektrische Anschluss (32a) der Sekundärspule (32) an einen Hochspannungsanschluss (21) der Funkenstrecke angeschlossen ist.

8. Zündsystem nach Anspruch 7, wobei der zweite Anschluss (32b) der Primärspule (32) eingerichtet ist, mittels eines steuerbaren Schalters (S), insbesondere eines IGBTs oder MOSFETs, elektrisch mit einer elektrischen Masse, insbesondere einem dem Hochspannungsanschluss (21) gegenüberliegenden elektrischen Potential der Funkenstrecke, verbunden zu werden.

## Claims

1. Boost converter (1) for supplying electrical energy to a spark gap of an internal combustion engine, said boost converter comprising:
- a transformer (3) having a primary coil (31) and a secondary coil (32), wherein
- the secondary coil (32) is wound in a multilayered fashion and
- the primary coil (31) is wound coaxially to the secondary coil (32) over an outermost layer (32x) of the secondary coil (32), wherein
- a first electrical connection (32a) of the secondary coil (32) is electrically connected to an innermost layer (321) of the secondary coil (32),
- the first electrical connection (32a) of the secondary coil (32) is configured for electrical connection to a high-voltage connection (21) for the spark gap,
**characterized in that**
- the coils (31, 32) are enclosed in two shell halves (35a, 35b) of a ferrite core (4),
- the transformer (3) further comprises a coil body (33) having a substantially rotationally symmetrical main body having a chamber base (331) and chamber walls (332, 333) adjoining the chamber base (331) on both sides, wherein the secondary coil (32) is wound on the chamber base (331) between the chamber walls (332, 333) and the primary coil (31) is wound on the outermost layer (32X) of the secondary coil (32) between the chamber walls (332, 333),
- the first electrical connection (32a) of the secondary coil (32) is led out of an innermost layer (321) of the secondary coil (32), said innermost layer being situated in the chamber base (331),
- a second electrical connection (32b) of the secondary coil (32) and/or a first electrical connection (31a) of the primary coil (31) is/are associated with an input voltage (Uₑ) on the on-board power supply system side, and
- a second connection (31b) of the primary coil (31) branches off from an outermost layer (31X) of the primary coil (31).

2. Boost converter according to Claim 1, wherein a second electrical connection (31b) of the primary coil (31) is associated, by way of a controllable switch (S), in particular an IGBT or MOSFET, with an electrical earth, in particular with an electrical potential of the spark gap, said electrical potential being situated opposite the high-voltage connection (21) .

3. Boost converter according to Claim 2 and 3, wherein also the primary coil (31) is wound in a multilayered fashion and the first connection (31a) of the primary coil (31) is electrically connected to an innermost layer (311) of the primary coil (31), and the second connection (31b) of the primary coil (31) is electrically connected to an outermost layer (31X) of the primary coil (31).

4. Boost converter according to Claim 1,
- wherein the coil body (33) further has a slot (334) for spatial fixing and electrical contact-connection of the electrical connections (31a, 31b, 32a, 32b) of the coils (31, 32), and/or
- wherein the first electrical connection (32a) of the secondary coil (32) is electrically insulated from the primary coil (31) by a chamber wall (332) of the main body.

5. Boost converter according to one of the preceding claims, wherein the transformer (3) has a transformation ratio between 5 and 30, in particular between 7 and 20, preferably between 8 and 15.

6. Boost converter according to one of the preceding claims, wherein the primary coil (31) and the secondary coil (32) consist of enamelled copper wires.

7. Ignition system having a spark gap for applied ignition of a combustible mixture of an internal combustion engine, **characterized by**
- a boost converter (1) according to one of the preceding Claims 1 to 6 for supplying electrical energy to an ignition spark established at the spark gap, wherein
- the first electrical connection (32a) of the secondary coil (32) is connected to a high-voltage connection (21) of the spark gap.

8. Ignition system according to Claim 7, wherein the second connection (32b) of the primary coil (32) is configured to be electrically connected, by means of a controllable switch (S), in particular an IGBT or a MOSFET, to an electrical earth, in particular to an electrical potential of the spark gap, said electrical potential being situated opposite the high-voltage connection (21).

## Revendications

1. Convertisseur élévateur (1) destiné à alimenter en énergie électrique un éclateur d'un moteur à combustion interne, comprenant :
- un transformateur (3) comportant une bobine primaire (31) et une bobine secondaire (32), dans lequel
- la bobine secondaire (32) est enroulée sur plusieurs couches et
- la bobine primaire (31) est enroulée coaxialement à la bobine secondaire (32) sur une couche située le plus à l'extérieur (32x) de la bobine secondaire (32), dans lequel
- une première borne électrique (32a) de la bobine secondaire (32) est connectée électriquement à une couche située le plus à l'intérieur (321) de la bobine secondaire (32),
- la première borne électrique (32a) de la bobine secondaire (32) est conçue pour être connectée électriquement à une borne à haute tension (21) destinée à l'éclateur,
**caractérisé en ce que**
- les bobines (31,32) sont enfermées dans deux moitiés (35a, 35b) d'un noyau de ferrite (4),
- le transformateur (3) comprend en outre un corps de bobine (33) ayant un corps de base sensiblement symétrique de rotation avec une base de chambre (331) et des parois de chambre (332, 333) contiguës à la base de chambre (331) de part et d'autre de celle-ci, dans lequel la bobine secondaire (32) est enroulée sur la base de chambre (331) entre les parois de chambre (332, 333), et la bobine primaire (31) est enroulée sur la couche située le plus à l'extérieur (32X) de la bobine secondaire (32) entre les parois de chambre (332, 333),
- la première borne électrique (32a) de la bobine secondaire (32) est amenée à sortir d'une couche (321) de la bobine secondaire (32), située dans la base de chambre (331) et le plus à l'intérieur,
- une deuxième borne électrique (32b) de la bobine secondaire (32) et/ou une première borne électrique (31a) de la bobine primaire (31) est ou sont associée(s) à une tension d'entrée (Uₑ) du côté de l'alimentation électrique embarquée, et
- une deuxième borne (31b) de la bobine primaire (31) bifurque à partir d'une couche située le plus à l'extérieur (31X) de la bobine primaire (31).

2. Convertisseur élévateur selon la revendication 1, dans lequel une deuxième borne électrique (31b) de la bobine primaire (31) est associée, par l'intermédiaire d'un commutateur (S) commandable, en particulier d'un IGBT ou d'un MOSFET, à une masse électrique, en particulier à un potentiel électrique de l'éclateur, qui est opposé à la borne à haute tension (21).

3. Convertisseur élévateur selon les revendications 2 et 3, dans lequel la bobine primaire (31) est également enroulée sur plusieurs couches et la première borne (31a) de la bobine primaire (31) est connectée électriquement à une couche située le plus à l'intérieur (311) de la bobine primaire (31), et la deuxième borne (31b) de la bobine primaire (31) est connectée électriquement à une couche située le plus à l'extérieur (31X) de la bobine primaire (31).

4. Convertisseur élévateur selon la revendication 1,
- dans lequel le corps de bobine (33) comporte en outre une poche (334) destinée à fixer spatialement et à mettre électriquement en contact les bornes électriques (31a, 31b, 32a, 32b) des bobines (31, 32), et/ou
- dans lequel la première borne électrique (32a) de la bobine secondaire (32) est isolée électriquement par une paroi de chambre (332) du corps de base par rapport à la bobine primaire (31).

5. Convertisseur élévateur selon l'une des revendications précédentes, dans lequel le transformateur (3) présente un rapport de transformation compris entre 5 et 30, en particulier entre 7 et 20, et de préférence entre 8 et 15.

6. Convertisseur élévateur selon l'une des revendications précédentes, dans lequel la bobine primaire (31) et la bobine secondaire (32) sont constituées de fils de cuivre émaillés.

7. Système d'allumage comportant un éclateur pour l'allumage commandé d'un mélange combustible d'un moteur à combustion interne, **caractérisé par**
- un dispositif convertisseur élévateur (1) selon l'une des revendications 1 à 6 précédentes, destiné à alimenter en énergie électrique une étincelle d'allumage se produisant au niveau de l'éclateur, dans lequel
- la première borne électrique (32a) de la bobine secondaire (32) est raccordée à une borne à haute tension (21) de l'éclateur.

8. Système d'allumage selon la revendication 7, dans lequel la deuxième borne (32b) de la bobine primaire (32) est conçue pour être connectée électriquement, au moyen d'un commutateur (S) commandable, en particulier d'un IGBT ou d'un MOSFET, à une masse électrique, en particulier à un potentiel électrique de l'éclateur, qui est opposé à la borne à haute tension (21).
